(19) **Europäisches Patentamt / European Patent Office / Office européen des brevets**

(11) **EP 3 400 859 B1**

(12) # EUROPÄISCHE PATENTSCHRIFT

(45) Veröffentlichungstag und Bekanntmachung des Hinweises auf die Patenterteilung:
**27.05.2026 Patentblatt 2026/22**

(21) Anmeldenummer: **18020181.6**

(22) Anmeldetag: **30.04.2018**

(51) Internationale Patentklassifikation (IPC):
*A47L 9/28* (2006.01)    *A47L 11/40* (2006.01)
*G05D 1/22* (2024.01)    *A47L 5/00* (2006.01)
*G05D 1/245* (2024.01)    *G05D 1/224* (2024.01)
*G05D 1/646* (2024.01)    *G05D 105/10* (2024.01)
*G05D 109/10* (2024.01)    *G05D 111/50* (2024.01)

(52) Gemeinsame Patentklassifikation (CPC):
**A47L 9/28; A47L 5/00; A47L 11/40; A47L 11/4011; G05D 1/2246; G05D 1/245; G05D 1/646;**
A47L 2201/02; A47L 2201/022; A47L 2201/024; A47L 2201/026; A47L 2201/028; A47L 2201/04; G05D 2105/10; G05D 2109/10;    (Forts.)

(54) **SERVICESTATION FÜR MOBILE ROBOTER**

SERVICE UNIT FOR MOBILE ROBOTS

STATION DE SERVICE POUR UN ROBOT MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2017 DE 102017109882**

(43) Veröffentlichungstag der Anmeldung:
**14.11.2018 Patentblatt 2018/46**

(73) Patentinhaber: **ADLATUS Robotics GmbH 89077 Ulm (DE)**

(72) Erfinder:
• **Zell, Simon 89073 Ulm (DE)**
• **Hochdorfer, Siegfried 88471 Untersulmetingen (DE)**

(74) Vertreter: **Meyer, Thorsten Meyer Patentanwaltskanzlei Pfarrer-Schultes-Weg 14 89077 Ulm (DE)**

(56) Entgegenhaltungen:
**WO-A1-2005/055795     WO-A1-2015/127954 DE-B3- 102015 100 359**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
   G05D 2111/54

**Beschreibung**

Die Erfindung betrifft eine Servicestation für mobile Roboter mit einer Einrichtung zur elektrischen Ladung der Akkumulatoren.

Aus der DE 20 2009 018 986 U1 ist eine Servicestation an die ein Serviceroboter selbstständig andocken und sich mit Versorgungsmedien versorgen kann bekannt.

Es sind Serviceroboter bekannt, die durch selbstständiges Andocken an eine Station die Akkumulatoren laden.

Um das autarke Handeln eines Reinigungsroboters effizient verlängern zu können reicht es nicht aus wenn die Batterien selbständig geladen werden. Denn der Reinigungsroboter benötigt neben elektrischer Energie auch Wasser und er muss seinen Schmutzwasserbehälter leeren.

Aus der WO2005055795A1 ist ein selbstfahrendes oder zu verfahrendes Kehrgerät mit einer Kehrbürste und einem zugeordneten Schmutzsammelraum bekannt, bei dem ein Kehrgerät der in Rede stehenden Art dahingehend verbessert auszugestalten sein soll, dass dieses gegenüber den bekannten Geräten eine vollständige Reinigung ermöglicht, wird eine Flüssigkeits-Auftragseinrichtung vorgeschlagen, die in Verfahrrichtung hinter der Kehrbürste angeordnet ist und eine weiter dahinter angeordnete Entfeuchtungs-Einrichtung.

Aufgabe der Erfindung ist es eine verbesserte Servicestation zur Verfügung zu stellen, die sowohl die Strom- als auch das Wasserübertragung ermöglicht.

Diese Aufgabe wird durch eine Servicestation für mobile Roboter nach den Merkmalen des Anspruchs 1 gelöst.

Erfindungsgemäß ist eine Servicestation für mobile Roboter mit Möglichkeit zur elektrischen Ladung der Akkumulatoren vorgesehen, wobei diese Vorkehrungen zur Lokalisierungsunterstützung und/oder Vorkehrungen zum Ausgleich der Restpositionierungenauigkeiten aufweist,

wobei die bei der Positionierung vorliegende Restabweichung über einen an der Servicestation angebrachter konischer Dorn und ein am mobilen Roboter angebrachtes Führungselement ausgeglichen wird, wobei der Dorn gegenüber der Führung eine Spielpassung aufweist; zur Korrektur des Winkelversatzes sind elastische Pufferelemente vorgesehen, und der Teil der Servicestation, auf dem Dorn und Kupplungen angebracht sind, ist auf einem linear beweglich gelagerten
Schlitten montiert,
und dass zur Korrektur des Winkelversatzes durch elastische Pufferelemente ausgleichbar ist.

Von Vorteil ist vorgesehen, dass die Servicestation eine Übertragungsmöglichkeit zum Auffüllen für Frischwasser bzw. vorgemischte Reinigungsflüssigkeit aufweist, und/oder eine Möglichkeit zum Ablassen und/oder Abpumpen des Schmutzwassers aufweist, wobei

die Versorgung mit Frischwasser mittels des Leitungsdrucks in den Frischwassertank gepumpt wird, und das Schmutzwasser von der Servicestation aufgenommen und in einen Abfluss abgeführt wird.

Bevorzugterweise ist vorgesehen, dass diese eine zusätzliche Übertragungsmöglichkeit für Reinigungsmittel aufweist.

Vorzugsweise umfasst die Servicestation eine Vorrichtung zum automatischen Abpumpen des Schmutzwassers aus dem mobilen Roboter sowie eine zusätzliche Übertragungsmöglichkeit für Reinigungsmittel
Eine Ausgestaltung sieht vor, dass diese eine Vorrichtung zur Reinigung einer oder mehrerer Abziehlippen aufweist.

Nach einem weiteren Aspekt der Erfindung ist eine Servicestation für mobile Roboter vorgeschlagen, wobei diese Vorkehrungen zum Bürsten- und/oder Bearbeitungswerkzeug-Wechsel auf. Hierbei können die notwendigen aktorisch auszuführenden Bewegungen vom Roboter und/oder der Servicestation ausgeführt werden.

Darüber hinaus ist die Servicestation in der Lage Daten zu übertragen, die Absauglippe zu reinigen und die Bürsten auszuwechseln.

Erfindungsgemäß wird eine Full-Servicestation vorgeschlagen, welches es einem autonomen Reinigungsroboter erlaubt autark seine Aufgaben über einen längeren Zeitraum auszuführen. Hierzu ist über die automatisierte Batterieladung hinaus vor allem auch das automatisierte Abpumpen des Schmutzwassers und das automatisierte Befüllung des Frischwassers und Reinigungsmitteln erforderlich.

Darüber hinaus ist es weiterhin aufgrund der im Betrieb vorkommenden Verschmutzung der Absauglippe am Reinigungsroboter erforderlich eine Reinigung derer an der Servicestation zu ermöglichen. Ansonsten würde das Reinigungsergebnis aufgrund von Schlierenbildung inakzeptabel ausfallen.

Ein weiteres wesentliches erfindungsgemäßes Merkmal bildet eine automatisierte Bürstenwechselvorrichtung an der Servicestation, welches es dem Roboter ermöglicht einerseits im Falle von Verschleiß die Bürsten zu erneuern oder beim Wechsel der Bürsten und/oder Pads geänderten Reinigungsanforderungen am Objekt über den längeren autonomen Betrieb gerecht zu werden.

Erfindungsgemäß werden für den automatischen Ablauf erforderliche Maßnahmen an der Servicestation Eigenschaften wie die Lokalisierungsunterstützung und den Ausgleich von verbleibenden Positionier- und Orientierungsfehlern angegeben.

Um diese Verbesserung umsetzen zu können muss Wasser zwischen der Servicestation und dem Roboter ausgetauscht werden können. Um hierbei die Leckage so gering wie möglich zu halten, ist eine exakte Positionierung des Serviceroboters gegenüber der Servicestation notwendig. Der technische Aufwand ist daher gegenüber reinen Ladestationen für Strom deutlich höher und ist nur in Kombination der folgenden Teilaufgaben zu realisieren.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:

Fig. 1    eine schematische Darstellung eines Reinigungsroboters von der Seite,

Fig. 2    eine schematische Darstellung eines Reinigungsroboter von unten,

Fig. 3    eine schematische Darstellung des Ausgleichs der Positionsungenauigkeiten,

Fig. 4    eine schematische Darstellung des Ausgleichs des Winkelversatzes,

Fig. 5    eine schematische Darstellung der Schmutzwasserübertragung,

Fig. 6    eine schematische Darstellung der Lagekontakte,

Fig. 7    eine schematische Darstellung der Codierung der Ladekontakte,

Fig. 8    eine schematische Darstellung der Reinigung der Absauglippe,

Fig. 9    eine schematische Darstellung der Bürstenwechseleinheit 1,

Fig. 10    eine schematische Darstellung der Bürstenwechseleinheit 2, und

Fig. 11    eine schematische Darstellung der Bürstenwechseleinheit 3.

Die in den Figuren gleichen Bezugsziffern bezeichnen gleiche oder gleich wirkende Elemente.

Der Reinigungsroboter besteht aus unterschiedlichen Komponenten. Die für die Patentanmeldung wichtigen Elemente werden im Folgenden dargestellt.

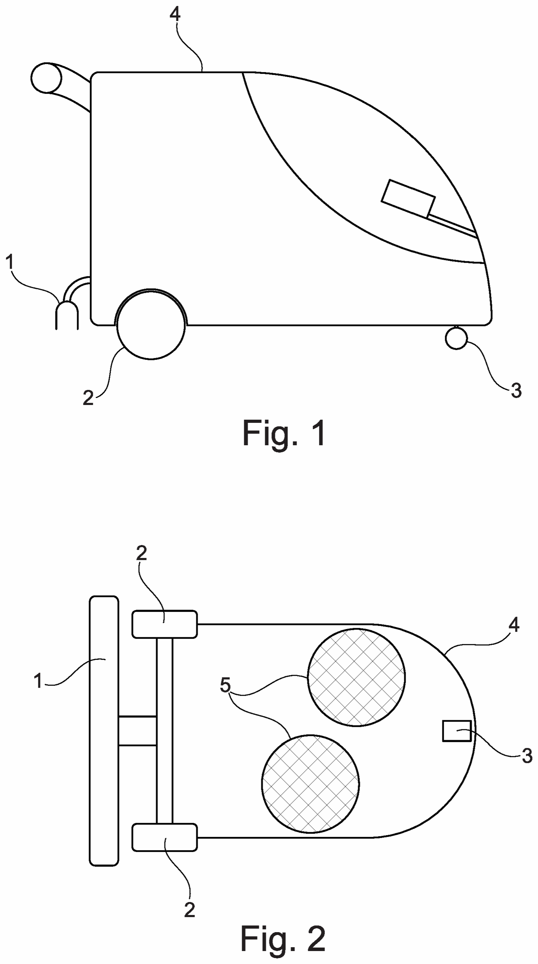

Die Fig. 1 und 2 zeigen einen Reinigungsroboter von der Seite und von unten gesehen.

Um die Positionierung des Roboters gegenüber der Servicestation möglichst genau umsetzen zu können, wird die Servicestation mit Signifikanten Merkmalen ausgestattet. Diese Merkmale können z.B. sein:

- Eindeutige geometrische Form, wie Winkel, Rundung, Ecke, etc. Diese geometrisch eindeutige Form kann durch Distanzmessungen gut erkannt werden und der Roboter kann dann seine Lage im Verhältnis zur Servicestation berechnen und einen geeigneten Pfad zum Anfahren der Station ermitteln.

- stark reflektierende Fläche wie Reflektoren oder Spiegel. Reflektoren können mit Laserscannern sehr gut identifiziert werden, da die Intensität der reflektierten Strahlen deutlich höher ist als bei normalen Oberflächen. Spiegel dagegen strahlen nur zurück wenn der ausgesendete Strahl im rechten Winkel auf den Spiegel auftritt. Trifft der Strahl unter einem anderen Winkel auf den Spiegel auf, so gibt es keinerlei Rückmeldung zum Laserscanner. Diese Zonen der Nichtreflektion können somit eindeutig identifiziert werden.

- Signalgebende Elemente wie Ultraschallsensoren. Sind beispielsweise mindestens zwei Ultraschallsensoren an der Station angebracht und mindestens zwei Ultraschallsensoren am Fahrzeug, so können diese synchronisiert durch Funk die Distanzen zwischen den Sensoren bestimmen, womit dann wiederum eindeutig die Lage in Position und Orientierung des Roboters zur Station berechnet werden kann. Bei weniger Sensoren kann ein durch eine Einzelmessung unterbestimmte Lagebestimmung durch das Verfahren des Roboters selbst zur eindeutigen Berechnung der Lage zwischen Roboter und Station durchgeführt werden.

- Optische Codes. Strich- oder QR-Codes können mit einer Kamera sehr zuverlässig erkannt und lokalisiert werden. An Hand der Codes ist die Bestimmung der Lage des Roboter im Verhältnis zur Servicestation möglich und ein Pfad zum Anfahren der Servicestation kann ermittelt werden.

Durch Positionierungenauigkeiten kann beim Andocken des Roboters an die Servicestation ein Quer- und Winkelversatz zwischen Roboter und Station entstehen.

Der Ausgleich der Querversatzes findet zweistufig statt. Beim Anfahren der Servicestation fährt der Roboter mit deinem Castorwhell in einer konisch zulaufenden Schiene, die fest mit der Servicestation verbunden ist. Bei der Fahrt in der Schiene wir der Roboter anhand der auftretenden Widerstände, die bei Kontakt mit der Schiene auftreten, gesteuert. Das erfolgt dadurch, dass der Roboter, die bei Kontakt höher werdenden Motorströme durch ein Gegenlenken des Roboters versucht zu regeln. Im zweiten Schritt tritt ein an der Servicestation angebrachter konischer Dorn in eine am Roboter angebrachte Führung ein. Der Dorn hat gegenüber der Führung eine Spielpassung. Da es nicht möglich ist, diese feinen Ungenauigkeiten über die Roboternavigation auszugleichen, werden diese Ungenauigkeiten von der Servicestation ausgeglichen. Dazu wird der Teil der Servicestation, auf dem der Dorn und die Kupplungen angebracht sind, auf einem linear beweglich gelagerten Schlitten montiert. Damit der Roboter die Servicestation stets im gleichen Zustand vorfindet, wird dieser bewegliche Schlitten wird mit Federn in der Mittelstellung gehalten.

Bauteiltoleranzen werden durch schwimmend gelagerte Kupplungen ausgeglichen.

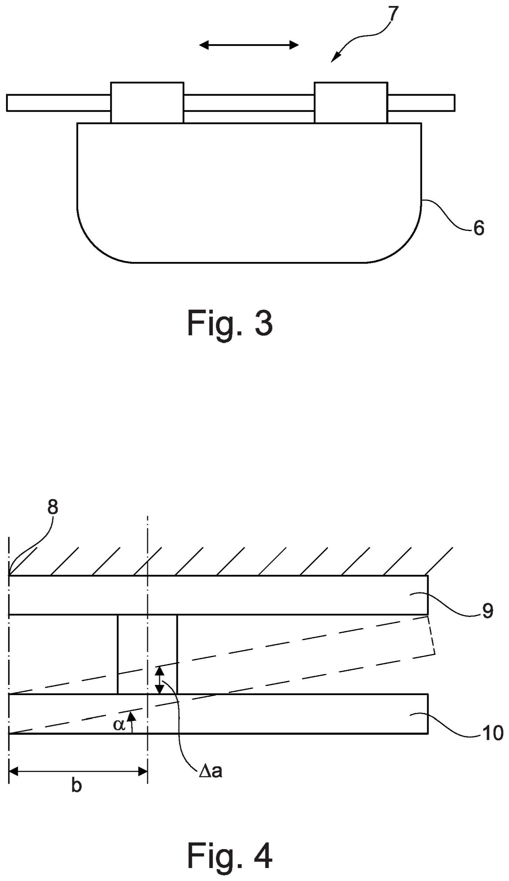

Siehe hierzu auch Fig. 3. In der Figur ist oben die Linearachse dargestellt. Auf dieser Linearachse laufen die Kugelgelagerten Gleitschlitten. An den Gleitschlitten ist die eigentliche Servicestation mit den Kupplungen für Wasser, Strom und Daten montiert.

Der Winkelversatz kann durch elastische Pufferelemente ausgeglichen werden. Die Pufferelemente müssen dabei so angebracht sein, dass ein möglichst großer Winkel ausgeglichen werden kann. Das kann zum einen dadurch erreicht werden, dass vier Gummipuffer nahe der Mitte montiert werden. Es ist darauf zu achten, dass die Gummipuffer bei der auftretenden Kraft genügen nachgeben um den gewünschten Winkel zu erreichen. Den Winkel kann man durch die Position der Gummipuffer wie folgt beeinflussen:

Δa = Dehnung der Gummielemente
b= Abstand der Gummielemente zur Mittellinie
F= auftretende Kraft
c = Federkonstante des Gummielements
α = Winkel

$$\Delta a = \frac{F}{c}$$

$$\alpha = tan\frac{b}{\Delta a}$$

Siehe auch Fig. 4, in dieser ist ganz oben die Grundplatte dargestellt. Die Grundplatte ist fest mit der Räumlichkeit in der die Servicestation betrieben wird verschraubt. Die Bewegliche Platte ist unten im Bild dargestellt. Zwischen der Grundplatte und der beweglichen Platte befinden sich die Gummielemente. Man sieht, je größer der Abstand b zwischen der Mittelinie der Servicestation und der Mittelinie der Gummielemente ist, desto größer muss das Δa sein um denselben Winkel der beweglichen Platte gegenüber der Grundplatte zu erhalten. Damit das Δa bei gleichbleibender Kraft größer werden kann muss die Federkonstante des Gummielements verringert werden. Ein Verringern der Federkonstante ergibt jedoch gleichzeitig eine Verringerung der Stabilität gegenüber vertikaler Kräfte. Es ist darum darauf zu achten, die Position der Gummielemente genau mit den Eigenschaften der Gummielemente abzustimmen.

Das Frischwasser wird mittels des Leitungsdruckes in den Frischwassertank gepumpt. Damit beim Übertragen des Wassers keine Leckage entsteht, werden für die Übertragung selbstsperrende Kupplungen der verwendet. Dies Kupplungen können einen, durch Bauteiltoleranzen verursachten, Versatz von 1 mm ausgleichen. Die Frischwasserzufuhr wird darüber hinaus durch ein Magnetventil gestoppt, damit ein Kupplungsvorgang druckfrei ausgeführt werden kann. Das ist wichtig um die benötigten Kupplungskräfte möglichst gering zu halten. Das Magnetventil befindet sich in der Zulaufleitung der Servicestation. Dieses wird als fertiges Bauteil gekauft und besitzt eine Aquastopp Funktion.

Die Vorschriften zum Schutz des Trinkwassers vor Verunreinigung laut DIN EN 1717 werden dadurch eingehalten, dass ein zertifiziertes, doppeltes Rückschlagventil in der Zuleitung des Frischwassers verbaut wird.

Das Schmutzwasser wird durch den hypostatischen Druck aus dem Roboter drückt und von der Servicestation aufgenommen. Damit das Schmutzwasser auch in einem höher gelegenen Abfluss abgeführt werden kann, wird es mit einer Pumpe aus der Servicestation herausgepumpt. Das Schmutzwasser wird vom Roboter zur Servicestation über eine einfache Kupplung übertragen. An der Front des Roboters wird Rohrstück angebracht aus und über einen Schlauch mit dem Schmutzwassertank des Roboters verbunden. Damit das Rohr nicht aus der Geometrie des Roboters herausragt und somit ein Gefahrenpotential bietet, wird das Rohrstück nach hinten versetzt montiert. Das vorderste Ende des Rohrstück befindet sich somit hinter der vordersten Kante des Roboters. Das Gegenstück ist ebenfalls ein Rohrstück, das an der Servicestation angebracht ist. Es wird so lange ausgeführt, dass es bei einem Andockvorgang in die Geometrie des Roboters eindringt. Im vorderen Teil des Rohrstücks der Servicestation wird eine Gummidichtung angebracht. Diese soll ein ungewolltes Auslaufen des Schmutzwassers verhindern.

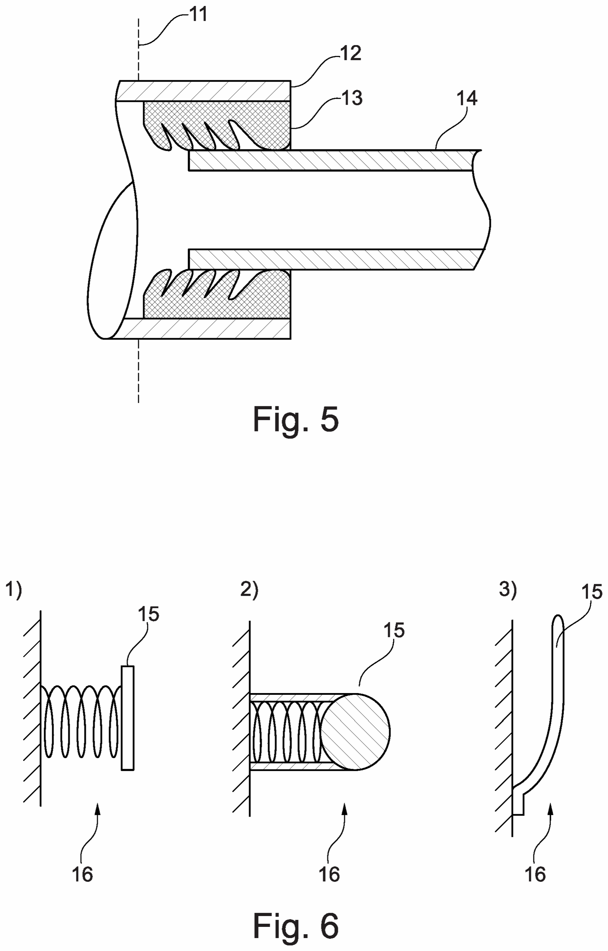

In Fig. 5 ist links das Rohr der Servicestation dargestellt. In diesem Rohr befindet sich die Dichtung. Die Dichtung ist im Inneren mit Lamellen ausgestattet. So soll eine bessere Abdichtung gegenüber einer glatten Dichtung erreicht werden. Rechts im Bild ist das Rohrstück dargestellt, das sich am Reinigungsroboter befindet.

Eine Alternative für die Schmutzwasserübertragung ist das Übertragen des Schmutzwassers mittels eines an der Servicestation befindlichen Beckens in das das Schmutzwasser hinein fließt. Ist der Reinigungsroboter an der Servicestation angedockt, befindet sich der Auslass des Schmutzwassers oberhalb des Beckens der Servicestation in das das Schmutzwasser hineinfließen soll. Das in das Becken geflossene Schmutzwasser wird mit einer Pumpe aus der Servicestation hinaus gepumpt.

Der Ladestrom wird mit Ladekontakten übertragen. Um einen gleichmäßigen Anpressdruck und Kontaktierung zu gewährleisten, werden die Kontakte einseitig federnd befestigt.

Das kann - wie in Fig. 6 gezeigt - durch unterschiedliche Möglichkeiten erreicht werden.

- Kontakte mit extern verbauter Feder (1)
- Zylindrische Kontakte mit eingebauter Feder (2)
- Frei schwingende Kontakte aus Federstahl (3)

In den Teildarstellungen 1) bis 3) in Fig. 6 ist links jeweils das feste Element dargestellt an denen die Kontakte montiert werden. Die Flächen in den Bildern rechts stellen die Kontaktflächen dar.

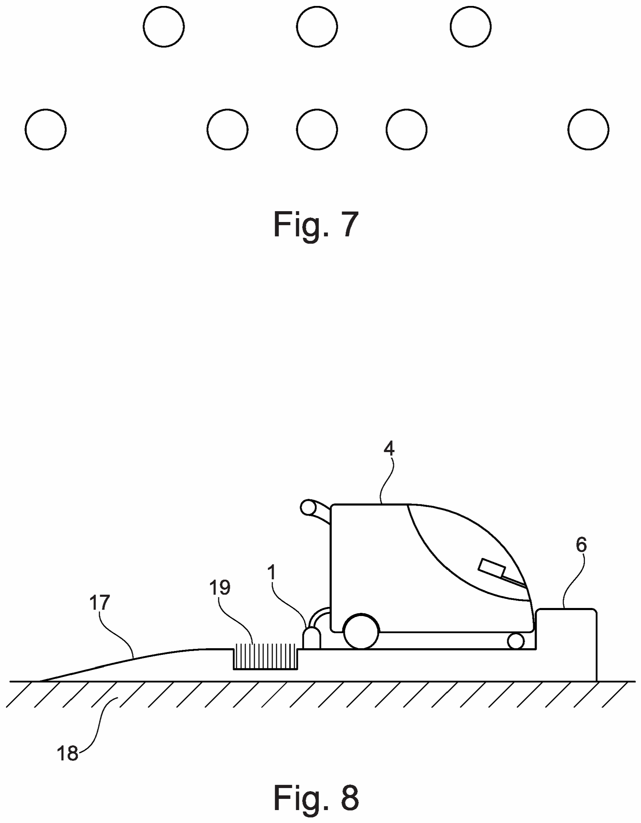

Um eine falsche Polung der Ladekontakte zu vermeiden, wird die Anordnung der Kontakte so codiert, dass eine Verbindung nur in der richtigen Position möglich ist. Siehe Fig. 7.

Eine weitere Möglichkeit der Ladestromübertragung ist das berührungslose Laden der Batterien mittels Induktion oder durch klassische Steckkontakte wie sie beispielsweise auch beim Laden von automotiven e-Fahrzeugen heutzutage zum Einsatz kommt.

Die Servicestation wird vom Roboter gesteuert. Dazu ist es notwendig Daten zuverlässig zwischen Roboter und Servicestation zu übertragen. Es gibt verschiedene Möglichkeiten Daten zu übertragen. Mechanisch, nach dem gleichen Prinzip wie die Ladeenergie oder berührungslos über Funk. Der Vorteil einer mechanischen Datenübertragung ist, dass damit auch gleich das Andocken des Reinigungsroboters an die Servicestation überprüft werden kann. Denn wenn der Roboter Daten von der Servicestation empfangen kann muss das Andocken erfolgreich sein.

Als Datenübertragungsprotokoll wird ein CAN-Bus verwendet. Dieses Protokoll benötigt bei einer mechanischen Übertragung zwei weitere Kontakte.

Eine Reinigung der Abziehlippen kann durch unterschiedliche Arten realisiert werden. Stand der Technik sind Verfahren, die in bestimmten Abständen die Absauglippe anheben, die Reinigungsmaschine zurücksetzten und erneut absaugen. Eine Verbesserung dagegen ist das aktive Reinigen der Absauglippe beim bewussten Überfahren einer Reinigungseinheit. Das kann folgendermaßen realisiert werden: Die Reinigungseinheit wird in die Servicestation integriert. Die gesamte Servicestation wird dafür ca. 100 mm über den Boden Platziert. Die Höhendifferenz kann mit einer Rampe überwunden werden. Die Erhöhung ist notwendig, damit die Reinigungseinheit für die Absauglippen in die Servicestation eingelassen werden kann. Die Reinigungseinheit für die Absauglippen wird so Platziert, dass sie beim Anfahren der Servicestation auf jenen Fall überfahren werden muss. Somit werden bei jedem Anfahren der Servicestation die Lippen von beiden Seiten gereinigt. Eine Seite bei der Vorwärtsfahrt zur Servicestation und die andere Seite bei der Rückwärtsfahrt aus der Servicestation heraus.

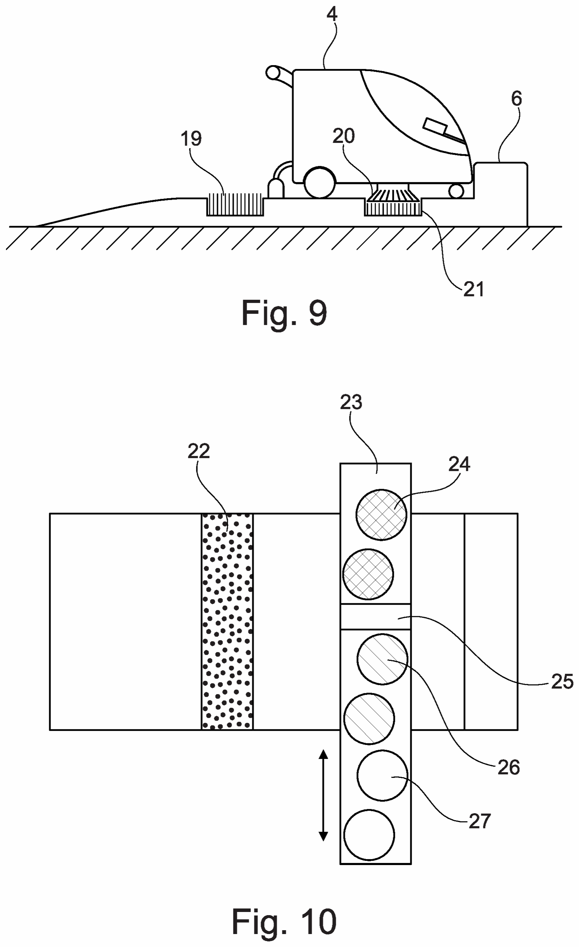

In Fig. 9 ist der Reinigungsroboter angedockt an der Servicestation dargestellt. Zum dargestellten Zeitpunkt hat der Reinigungsroboter die Absauglippenreinigungseinheit bereits überfahren. Links im Bild ist die Reinigungseinheit für die Absauglippen dargestellt. Rechts ist die Servicestation dargestellt, an die der Reinigungsroboter andockt.

Weiterhin zeigt Fig. 9, dass das vordere Rad des Reinigungsroboters die Aussparung für die Bürsten überwinden muss.

Dafür wird in der Aussparung für die Bürsten ein linear bewegliches Magazin eingebaut. In diesem Magazin werden auch die Bürsten aufbewahrt, die der Reinigungsroboter selbständig aufnehmen soll. Der gesamte Ablauf ist dann folgender: Der Reinigungsroboter fährt auf die Servicestation. Dabei wird seine Absauglippe gereinigt. Ist der Reinigungsroboter an der Servicestation angedockt werden seine Batterien geladen und das Wasserausgetauscht. Das Magazin der Bürsten steht zu diesem Zeitpunkt in Überfahrtstellung. Dann wird das Magazin so positioniert, dass sich ein leeres Bürstenfach unter dem Roboter befindet. Daraufhin lässt der Reinigungsroboter seine Bürsten ab und diese werden demontiert. Das Magazin bringt sich dann in eine Stellung, damit sich die gewünschten Bürsten unter dem Reinigungsroboter befinden und diese werden montiert. Zum Schluss fährt das Magazin wieder in Überfahrt Stellung.

In Fig. 10 ist die Servicestation in der Draufsicht dargestellt. Die Position des Magazins befindet sich in der Überfahrt Stellung. Somit ist der Steg, der zur Überfahrt benötigt wird in der Mitte der Station. Die Bürsten zum Wechseln befinden sich in den verschiedenen Fächern im Magazin. Ein Fach ist leer und kann die Bürsten, die am Roboter verbaut sind aufnehmen.

Eine Alternative zu dem beweglichen Bürstenmagazin ist, dass die Bewegung zu den verschiedenen Bürstenfächern vom Roboter selbst ausgeführt wird. Dazu fährt der Roboter auf die Station bis Position 1 auf. Von dieser Position kann der Roboter dann entweder an die Servicestation andocken um den Austausch des Wassers vorzunehmen und die Batterien zu Laden. Wenn ein Wechsel der Bürsten vorgenommen werden soll, kann der Roboter mit Hilfe seiner Antriebsräder nach links oder rechts schwenken wo sich eine oder mehrere Bürstenfächer befinden. Das oder die Vorderräder werden dabei in einer in die Servicestation eingelassenen Fahrspur geführt.

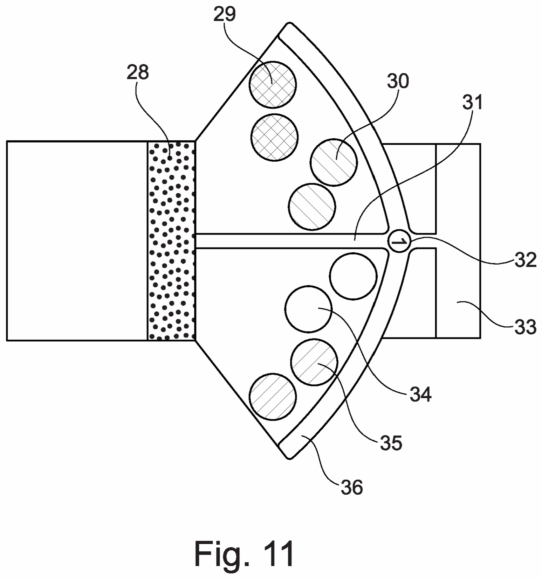

In Fig. 11 ist die Servicestation in der Draufsicht dargestellt. In der Mitte befinden sich die Fächer für die Ersatzbürsten sowie ein leeres Fach für die Ablage der am Roboter montierten Bürste. Zwischen den Fächern befindet sich ein Steg, auf dem der Roboter mit seinem Vorderrad zu Position 1 gelangen kann. Die kreisförmige Fahrspur dient dem Roboter als Führung, wenn dieser zwischen den Bürstenfächern wechselt. Rechts im Bild ist der Teil der Servicestation dargestellt an den der Roboter andocken kann, wenn das Wasser ausgetauscht werden soll und die Batterien geladen werden sollen.

Die Bürsten stehen stellvertretend auch für weitere Reinigungs- oder Bodenbearbeitungseinheiten, z.B. marktübliche Reinigungspads.

Für verschiedene Reinigungsaufgaben kann der Einsatz unterschiedlicher Reinigungsmittel notwendig sein. Dazu müssen auf dem Reinigungsroboter unterschiedliche Reinigungsmittelbehälter angebracht sein. Das automatische zu Befüllen des Reinigungsmittels kann auf die die gleiche Weise wie das Befüllen des Frischwassers realisiert werden. Dazu werden eine oder mehrere zusätzliche Kupplungen am Reinigungsroboter als auch an der Servicestation verbaut. Bei einem Andockvorgang wird diese Kupplung dann automatisch verbunden.

## Bezugszeichenliste

| | |
|---|---|
| 1 | Absauglippe |
| 2 | Hinterrad |
| 3 | Vorderrad |
| 4 | Reinigungsroboter |
| 5 | Bürsten |
| 6 | Servicestation |
| 7 | Linearführung |
| 8 | Mittellinie |
| 9 | Grundplatte |
| 10 | Bewegliche Platte |
| 11 | Kante der Robotergeometrie |
| 12 | Rohr an Servicestation |
| 13 | Dichtung |
| 14 | Rohr an Roboter |
| 15 | Kontaktflächen |
| 16 | Lagekontakte |
| 17 | Rampe |
| 18 | Boden |
| 19 | Absauglippen-Reinigungseinheit |
| 20 | Bürste |
| 21 | Bürstenwechseleinheit |
| 22 | Absauglippen-Reinigungseinheit |
| 23 | Magazin |
| 24 | Ersatzbürsten 1 |
| 25 | Steg zum überfahren |
| 26 | Ersatzbürsten 2 |
| 27 | Leeres Bürstenfach |
| 28 | Absauglippen-Reinigungseinheit |
| 29 | Ersatzbürsten 1 |
| 30 | Ersatzbürsten 2 |
| 31 | Steg zum überfahren |
| 32 | Position 1 |
| 33 | Servicestation |
| 34 | leeres Fach |
| 35 | Ersatzbürsten 3 |
| 36 | Fahrspur |

## Patentansprüche

1. Servicestation (6) für mobile Roboter (4) mit Möglichkeit zur elektrischen Ladung der Akkumulatoren,

   wobei diese Vorkehrungen zur Lokalisierungsunterstützung aufweist,
   **dadurch gekennzeichnet,**
   **dass** Vorkehrungen zum Ausgleich der Restpositionierungenauigkeiten vorgesehen sind, wobei die vorliegende Restabweichung bei der Positionierung zwischen Servicestation und mobilem Roboter über einen konischen Dorn und ein entsprechendes Gegenstück als Führung ausgeglichen wird, wobei der Dorn gegenüber der Führung eine Spielpassung aufweist, wobei Ungenauigkeiten bei der Anfahrt des Dorns an der Servicestation dadurch ausgeglichen werden, dass der Teil der Servicestation auf dem der Dorn und die Kupplungen angebracht sind auf einem an der Servicestation linear beweglich gelagerten Schlitten montiert sind,
   und **dass** zur Korrektur des Winkelversatzes durch elastische Pufferelemente ausgleichbar ist.

2. Servicestation nach Anspruch 1,
   **dadurch gekennzeichnet,**

   **dass** diese eine Übertragungsmöglichkeit zum Auffüllen für Frischwasser bzw. Vorgemischte-Reinigungsflüssigkeit aufweist, und/oder eine Möglichkeit zum Ablassen und/oder Abpumpen des Schmutzwassers aufweist, wobei die Versorgung mit Frischwasser wird mittels des Leitungsdruckes aus der Gebäudeinstallation in den Frischwassertank gepumpt, und das Schmutzwasser wird von der Servicestation aufgenommen in einen Abfluss in die Abwasserleitung abgeführt.

3. Servicestation nach Anspruch 1 oder 2,
   **dadurch gekennzeichnet,**
   **dass** diese eine Vorrichtung zum automatischen Abpumpen des Schmutzwassers aus dem mobilen Roboter beinhaltet.

4. Servicestation nach Anspruch 1, 2 oder 3,
   **dadurch gekennzeichnet,**
   **dass** diese eine zusätzliche Übertragungsmöglichkeit für Reinigungsmittel aufweist.

5. Servicestation nach einem der vorhergehenden Ansprüche, **dadurch gekennzeichnet,**
   **dass** diese eine Vorrichtung zur Reinigung einer oder mehrerer Abziehlippen aufweist.

**6.** Servicestation für mobile Roboter,
**dadurch gekennzeichnet,**
**dass** diese Vorkehrungen zum Bürsten- und/oder Bearbearbeitungswerkzeug-Wechsel aufweist.

**Claims**

**1.** A service station (6) for mobile robots (4) with a possibility for electrically charging the accumulators,

wherein it comprises provisions for localization support, **characterized in that**
provisions for compensating residual positioning inaccuracies are provided, wherein the existing residual deviation in the positioning between the service station and the mobile robot is compensated by means of a conical pin and a corresponding counterpart as a guide, wherein the pin has a clearance fit relative to the guide, wherein inaccuracies during the approach of the pin to the service station are compensated **in that** the part of the service station on which the pin and the couplings are mounted is mounted on a slide which is mounted linearly movably on the service station,
and **in that** angular offset is compensable by elastic buffer elements.

**2.** The service station according to claim 1,
**characterized in that**

it comprises a transfer possibility for refilling fresh water or premixed cleaning liquid, and/or a possibility for draining and/or pumping out the dirty water,
wherein the supply of fresh water is pumped into the fresh water tank by means of the line pressure from the building installation,
and the dirty water is received by the service station and discharged into a drain into the wastewater line.

**3.** The service station according to claim 1 or 2, **characterized in that**
it includes a device for automatically pumping out the dirty water from the mobile robot.

**4.** The service station according to claim 1, 2 or 3, **characterized in that**
it comprises an additional transfer possibility for cleaning agent.

**5.** The service station according to one of the preceding claims,
**characterized in that**
it comprises a device for cleaning one or more squeegee lips.

**6.** A service station for mobile robots, **characterized in that**
it comprises provisions for changing brushes and/or processing tools.

**Revendications**

**1.** Station de service (6) pour robots mobiles (4) avec possibilité de charge électrique des accumulateurs,

celle-ci présentant des dispositifs de soutien à la localisation,
**caractérisée en ce que**
des dispositifs de compensation des imprécisions résiduelles de positionnement sont prévus, l'écart résiduel présent lors du positionnement entre la station de service et le robot mobile étant compensé au moyen d'un pion conique et d'une contrepartie correspondante en tant que guidage, le pion présentant par rapport au guidage un ajustement avec jeu,
les imprécisions lors de l'approche du pion sur la station de service étant compensées **en ce que** la partie de la station de service sur laquelle sont montés le pion et les couplages est montée sur un chariot monté de manière linéaire mobile sur la station de service,
et **en ce qu'**un décalage angulaire est compensable par des éléments tampons élastiques.

**2.** Station de service selon la revendication 1, **caractérisée en ce que**

celle-ci présente une possibilité de transfert pour le remplissage d'eau propre ou de liquide de nettoyage prémélangé, et/ou une possibilité d'évacuation et/ou de pompage des eaux usées, l'alimentation en eau propre étant pompée dans le réservoir d'eau propre au moyen de la pression de conduite de l'installation du bâtiment,
et les eaux usées étant reçues par la station de service et évacuées dans un écoulement vers la conduite d'eaux usées.

**3.** Station de service selon la revendication 1 ou 2, **caractérisée en ce que**
celle-ci comprend un dispositif pour le pompage automatique des eaux usées hors du robot mobile.

**4.** Station de service selon la revendication 1, 2 ou 3, **caractérisée en ce que**
celle-ci présente une possibilité de transfert supplémentaire pour un agent de nettoyage.

**5.** Station de service selon l'une des revendications précédentes,

**caractérisée en ce que**
celle-ci présente un dispositif pour le nettoyage d'une ou de plusieurs lèvres de raclage.

6. Station de service pour robots mobiles,
   **caractérisée en ce que**
   celle-ci présente des dispositifs pour le changement des brosses et/ou des outils de traitement.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202009018986 U1
- WO 2005055795 A1